# EUROPÄISCHE PATENTSCHRIFT

(11) **EP 1 613 682 B1**
(45) Veröffentlichungstag und Bekanntmachung des Hinweises auf die Patenterteilung: **14.03.2007**
(21) Anmeldenummer: 04722173.4
(22) Anmeldetag: 20.03.2004
(51) Int. Cl.: C08G 64/14, C08G 64/16, C08G 64/02, C07D 311/60, C07D 311/64

(54) **HOCHVERZWEIGTE POLYCARBONATE UND COPOLYCARBONATE MIT VERBESSERTER FLIESSF HIGKEIT, IHRE HERSTELLUNG UND VERWENDUNG**
ULTRA-RAMIFIED POLYCARBONATES AND COPOLYCOARBONATES EXHIBITING AN IMPROVED FLOW CHARACTERISTICS, THE PRODUCTION AND USE THEREOF
POLYCARBONATES ET COPOLYCARBONATES ULTRA-RAMIFIES PRESENTANT UN MEILLEUR FACTEUR D'ECOULEMENT, FABRICATION ET UTILISATION

(30) Priorität: 04.04.2003 DE 10315290
(43) Veröffentlichungstag der Anmeldung: 11.01.2006
(73) Patentinhaber: Bayer MaterialScience AG, 51368 Leverkusen (DE)
(72) Erfinder: HEUER, Helmut-Werner, 47829 Krefeld (DE); WEHRMANN, Rolf, 47800 Krefeld (DE); ERKELENZ, Michael, 47239 Duisburg (DE)
(86) Internationale Anmeldenummer: PCT/EP2004/002952
(87) Internationale Veröffentlichungsnummer: WO 2004/087785

(56) Entgegenhaltungen:
- EP-A- 0 598 320
- EP-A- 0 811 619
- WO-A-03/020714
- US-A- 4 446 298
- PATENT ABSTRACTS OF JAPAN Bd. 1998, Nr. 14, 31. Dezember 1998 (1998-12-31) & JP 10 251395 A (MITSUBISHI GAS CHEM CO INC), 22. September 1998 (1998-09-22)

## Beschreibung

Gegenstand der vorliegenden Erfindung sind verzweigte Polycarbonate und Copolycarbonate mit verbesserter Fließfähigkeit, Verfahren zu deren Herstellung und deren Verwendung zur Herstellung bestimmter Produkte, sowie die daraus erhältlichen Produkte.

Aromatische Polycarbonate gehören zur Gruppe der technischen Thermoplaste. Sie zeichnen sich durch die Kombination der technologisch wichtigen Eigenschaften Transparenz, Wärmeformbeständigkeit und Zähigkeit aus.

Zur Gewinnung hochmolekularer linearer Polycarbonate nach dem Phasengrenzflächenverfahren werden im Zweiphasengemisch die Alkalisalze von Bisphenolen mit Phosgen umgesetzt. Das Molekulargewicht kann durch die Menge an Monophenolen wie z.B. Phenol oder tert.-Butylphenol gesteuert werden. Bei diesen Umsetzungen entstehen praktisch ausschließlich lineare Polymere, Dies kann durch Endgruppenanalyse nachgewiesen werden.

Zur Herstellung von linearen Polycarbonaten nach dem Phasengrenzflächenverfahren sei beispielhaft auf H. Schnell, Chemistry and Physics of Polycarbonates, Polymer Reviews, Vol. 9, Interscience Publishers, New York 1964 S. 33 ff. und auf Polymer Reviews, Vol. 10, "Condensation Polymers by Interfacial and Solution Methods", Paul W. Morgan, Interscience Publishers, New York 1965, Kap. VIII, S. 325 verwiesen.

In US B 4 185 009, DE A 25 00 092 und JP B 79039040 ist ein Verfahren beschrieben, in dem ausgehend von Gemischen spezieller Bisphenole mit Kettenabbrecher und Isatinbisphenolen als Verzweiger, nach Umsetzung mit Phosgen in einer Phasengrenzflächenreaktion verzweigte, hochmolekulare Polycarbonate erhalten werden können. In DE A 42 40 313 werden Copolycarbonate mit verbesserter Fließfähigkeit auf Basis von Bisphenol A und Bisphenol TMC mit Isatinbiskresol als Verzweiger beschrieben.

In DE A 19913533 werden hochverzweigte Polycarbonate beschrieben, bei deren Herstellung oligomere oder polymere Verzweiger zum Einsatz kommen. In DE A 19 943 642 sind verzweigte Polycarbonate angegeben, die aufgrund ihrer Strukturviskosität für den Einsatz als Wasserflaschenmaterial geeignet sind.

WO 03/020714 beschreibt neue Polyesterpolycarbonate aus speziellen Diphenolen, Verfahren zu deren Herstellung, sowie deren Verwendung zur Herstellung von Formkörpern und Extrudaten.

JP 10 251395 A beschreibt bestimmte Copolycarbonate, die eine spirobichroman-Struktur als weitere Strukturelle Einheit enthalten, als Binder für elektrophotographische Photorezeptoren.

US-A 4 446 298 beschreibt neue Triphenol-Verbindungen als Verzweigungsmittel und mit Hilfe dieser Verzweigungsmittel hergestellte Polycarbonate, die für Blasformen verwendbar sind. Die triphenolischen Verbindungen sind Reaktionsprodukte von Phenolen und Diketonen.

EP 811 619 A1 beschreibt Esterverbindungen, erhältlich durch Veresterung wenigstens einer OH-Gruppe, eines Polyphenols mit einer Carbonylverbindung, wobei die Esterverbindung als Härtungsmittel für Epoxyharze verwendet werden kann.

EP 598 320 A1 beschreibt Zusammensetzungen enthaltend ein Novolakharz und ein lichtsensitives Chinondiazid-Material, sowie eine alkalilösliche Verbindung mit einem Molekulargewicht > 900.

So beschreibt US B 5 367 044 Flaschen aus verzweigtem Polycarbonat, bei dem 1,1,1-Tris-(4-hydroxyphenyl)ethan (THPE) als Verzweiger in Mengen von 0,28 bis 0,36 mol-% eingesetzt wird.

Verzweigte Polycarbonate sind wegen ihrer im Vergleich zu linearen Polycarbonaten besseren Fließfähigkeit besonders für Anwendungen von Interesse, bei denen gutes Fließen der Polymerschmelze bei höheren Scherraten erwünscht ist, d. h. zum Beispiel beim Spritzgießen komplexer Strukturen. Verzweigte Polycarbonate zeichnen sich durch Strukturviskosität aus und können nicht mehr als newtonsche Fluide angesehen werden.

Die im Stand der Technik vorbeschriebenen verzweigten Polycarbonate bzw. deren Herstellungsverfahren sind jedoch bezüglich ihrer Herstellung unbefriedigend bzw. haben den Nachteil, dass die erreichbaren Verzweigungsgrade beschränkt sind. Der Einsatz von Verzweigern führt ab einer gewissen Menge zur Vergelung, was sich im Auftreten von unerwünschten Gelpartikeln äußert. Hoch verzweigte Polycarbonate sind mit den gängigen Verzweigern gar nicht zu realisieren, da der Reaktionsansatz beim Einsatz von höheren Verzweigerkonzentrationen nicht mehr rührbar ist. Es entsteht ein hochviskoser Klumpen, den man auch als Qualle bezeichnet.

Es bestand daher die Aufgabe, langkettig-verzweigte Polycarbonate und Verfahren zu deren Herstellung verfügbar zu machen, welche diese Nachteile vermeiden. Diese Aufgabe wird überraschenderweise durch den Einsatz von Verzweigern der allgemeinen Formeln (1a) und/oder (1b), 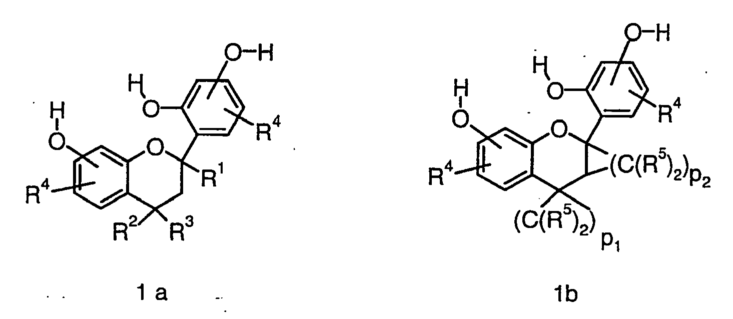 in welcher
- R¹, R² und R³: für lineare oder verzweigte C₁-C₁₀Alkyl, bevorzugt für lineare oder verzweigte C₁-C₈ Alkyl, besonders bevorzugt für lineare oder verzweigte C₁-C₆ Alkyl stehen,
- R⁴: für Wasserstoff oder lineare oder verzweigte C₁-C₁₀ Alkyl, bevorzugt lineare oder verzweigte C₁-C₈ Alkyl, besonders bevorzugt für Wasserstoff oder lineare oder verzweigte C₁-C₆ Alkyl stehen,
- R⁵: für Wasserstoff oder lineare oder verzweigte C₁-C₁₀ Alkyl, besonders bevorzugt für Wasserstoff und Methyl stehen,
- p₁ und p₂: unabhängig voneinander für eine ganze Zahl zwischen 3 und 10, bevorzugt zwischen 3 und 6, besonders bevorzugt für 3 oder 4 stehen.

Insbesondere bevorzugt werden Strukturen der allgemeinen Formel (1a) eingesetzt, die sich von Resorcin ableiten. Ganz besonders bevorzugt kommt ein Verzweiger mit der Struktur (1c) zum Einsatz, der sich aus Resorcin und Aceton ableitet.

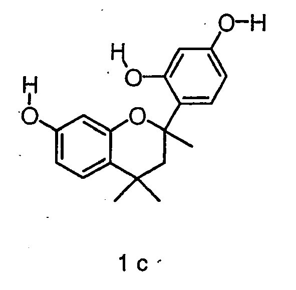

Überraschenderweise wurde dabei auch gefunden, dass die Schmelzviskosität der erhaltenen Polycarbonate sowohl bei niedrigen als auch höheren Scherraten niedrigere Werte als der Stand der Technik aufweisen (bei ansonsten vergleichbarem Molekulargewicht und mechanischen Eigenschaften). Dies ist besonders für die Herstellung von größeren Spritzgussteilen, wie z.B. Autoscheiben, von Bedeutung. Dadurch ist eine leichtere Befüllung der Formen mit gängigen Spritzgussmaschinen möglich.

Diese erfindungsgemäßen Verzweiger lassen sich aus Resorcin- oder Hydrochinonderivaten und Ketonen, im einfachsten Fall z.B. mit Aceton in einer sauer-katalysierten Reaktion herstellen (siehe z.B. P. Livant et al., J. Org. Chem. 1997, 62 737-742).

Die Synthese der Verzweiger wird z.B. als Kondensationsreaktion von linearen oder verzweigten C₁-C₁₀ Alkylketonen oder C₅-C₁₂ Cycloalkylketonen, bevorzugt linearen oder verzweigten C₁-C₈ Alkylketonen, oder C₅-C₈ Cycloalkylketonen, besonders bevorzugt linearen oder verzweigten C₁-C₆ Alkylketonen, oder C₅-C₆ Cycloalkylketonen mit C₁-C₁₀, bevorzugt C₁-C₈, besonders bevorzugt C₁-C₆ alkylsubstitiuierten Resorcin- oder Hydrochinonderivaten in unpolaren Lösungsmitteln, bevorzugt Toluol, Xylole oder halogenierten Kohlenwasserstoffen, besonders bevorzugt Toluol oder Xylole, ganz besonders bevorzugt Toluol, bevorzugt unter Mithilfe eines sauren Katalysators, besonders bevorzugt ein saurer Ionenaustauscher, konzentrierte Schwefel- oder Salzsäure, ganz besonders bevorzugt ein saurer Ionenaustauscher oder konzentrierte Schwefelsäure, insbesondere bevorzugt ein saurer Ionenaustauscher bei Temperaturen bevorzugt zwischen 0 und 180°C besonders bevorzugt zwischen 0 und 160°C, ganz besonders bevorzugt zwischen 0 und 150°C mit einem Unterschuss von Resorcin- bzw. Hydrochinonderivat zu Ketonderivat von maximal 1 zu 2, bevorzugt von max. 1 zu 1,6, besonders bevorzugt von max. 1 zu 1,5 ausgeführt.

Ebenfalls Gegenstand der vorliegenden Erfindung sind auch Polycarbonate bzw. Copolycarbonate, die unter Verwendung der erfindungsgemäßen Verzweiger hergestellt wurden sowie die entsprechenden Herstellungsverfahren. Die unter Verwendung der erfindungsgemäßen Verzweiger hergestellten verzweigten Polycarbonate, enthaltend die von den Verbindungen der Formeln 1a und/oder 1b abgeleiteten Verzweigerstrukturen, werden beispielhaft aber nicht ausschließlich durch die allgemeinen Formeln (2a) und (2b) dargestellt, 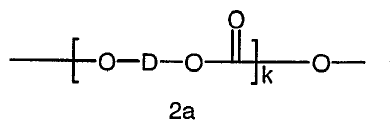 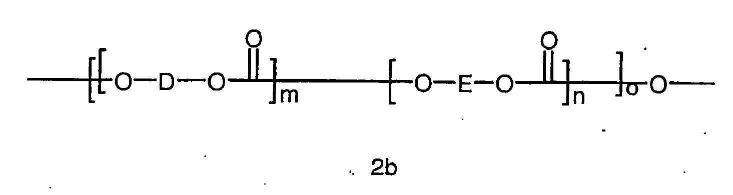 worin der Rest O-D-O bzw. O-E-O für beliebige Diphenolatreste steht; in denen -D- und -E-unabhängig voneinander ein aromatischer Rest mit 6 bis 40 C-Atomen ist, der einen oder mehrere aromatische oder kondensierte, gegebenenfalls Heteroatome enthaltende aromatische Kerne enthalten kann und gegebenenfalls mit C₁-C₁₂-Alkylresten oder Halogen substituiert ist und aliphatische Reste, cycloaliphatische Reste, aromatische Kerne oder Heteroatome als Brückenglieder enthalten kann und in denen k für eine ganze Zahl zwischen 1 und 4000, bevorzugt zwischen 2 und 2000 besonders bevorzugt zwischen 2 und 1000 und ganz besonders bevorzugt zwischen 2 und 500 und insbesondere bevorzugt zwischen 2 und 300 steht, m, n und o jeweils unabhängig voneinander für Zahlen zwischen 1 und 4000, bevorzugt zwischen 1 und 2000 besonders bevorzugt zwischen 1 und 1000 und ganz besonders bevorzugt zwischen 1 und 500 und insbesondere bevorzugt zwischen 1 und 300 stehen,
-O-D-O- und -O-E-O- können dann unabhängig voneinander auch für einen von den Verzweigern der Formeln 1a bis 1c abgeleiteten Rest Va, Vb oder Vc, bevorzugt Va und Vc, besonders bevorzugt Vc stehen, 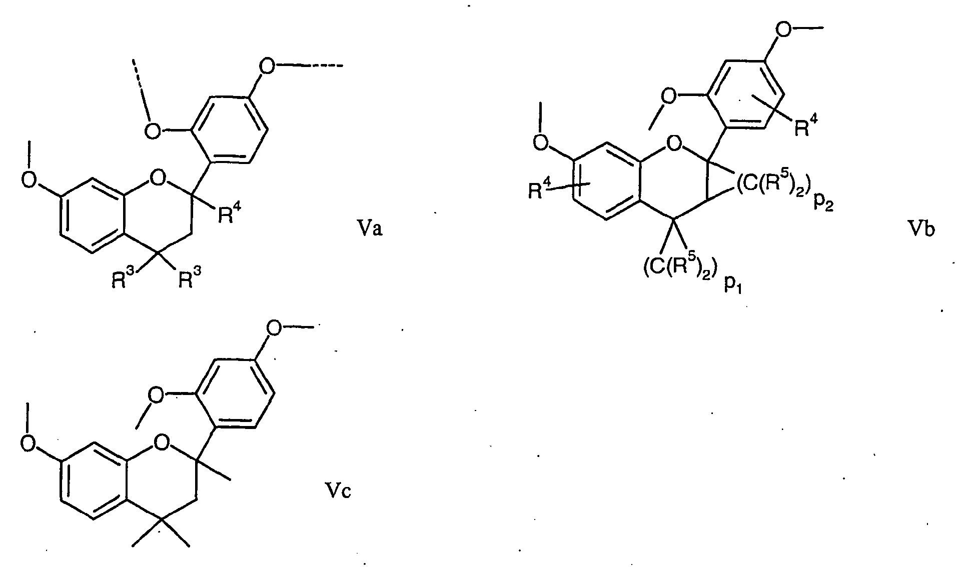 worin die Reste R³, R⁴ und R⁵ sowie p₁ und p₂ die oben genannten Bedeutungen besitzen und womit dann an dieser Stelle eine dritte Verknüpfungsstelle, eine Verzweigung der Polymerkette, auftritt.

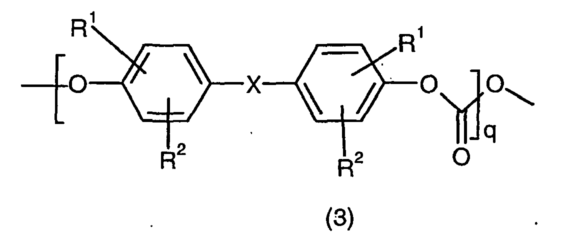

Bevorzugte Diphenolateinheiten der erfmdungsgemäßen verzweigten Polycarbonate und Copolycarbonate leiten sich von allgemeinen Strukturen der Formel (3) ab, wobei die Klammer die zugrunde liegenden Diphenolatreste beschreibt, in denen R1 und R² unabhängig voneinander für H, lineare oder verzweigte C₁-C₁₈ Alkyl- oder Alkoxyreste, Halogen wie Cl oder Br oder für einen gegebenenfalls substituierten Aryl- oder Aralkylrest, bevorzugt für H oder lineare oder verzweigte C₁-C₁₂ Alkyl-, besonders bevorzugt für H oder C₁-C₈ Alkylreste und ganz besonders bevorzugt für H oder Methyl stehen und X für eine Einfachbindung, -SO₂-, -CO-, -O-, -S-, einen C₁- bis C₆-Alkylen-, C₂- bis C₅-Alkyliden-, C₅- bis C₆-Cycloalkylidenrest, der mit C₁- bis C₆-Alkyl, vorzugsweise Methyl- oder Ethylresten substituiert sein kann, oder einen C₆- bis C₁₂-Arylenrest, der gegebenenfalls mit weiteren Heteroatome enthaltenden aromatischen Ringen kondensiert sein kann, steht, wobei q für eine ganze Zahl zwischen 1 und 4000, bevorzugt zwischen 2 und 2000 besonders bevorzugt zwischen 2 und 1000 und ganz besonders bevorzugt zwischen 2 und 500 und insbesondere zwischen 2 und 300 steht.

Besonders bevorzugt leiten sich die Diphenolatreste in den Formeln (2) und (3) von den im folgenden noch genannten, geeigneten Diphenolen ab.

Beispielhaft werden für die Diphenole, die der allgemeinen Formel (3) zugrunde liegen, Hydrochinon, Resorcin, Dihydroxybiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, sowie deren kernalkylierte und kernhalogenierte Verbindungen, und auch α,ω- Bis-(hydroxyphenyl)-polysiloxane genannt.

Bevorzugte Diphenole sind beispielsweise 4,4'-Dihydroxybiphenyl (DOD), 2,2-Bis-(4-hydroxyphenyl)-propan (Bisphenol A), 1,1-Bis-(4-hydroxyphenyl)-3,3,5-trimethylcyclohexan (Bisphenol TMC), 1,1-Bis-(4-hydroxyphenyl)-cyclohexan, 2,4-Bis-(4-hydroxyphenyl)-2-methylbutan, 1,1-Bis-(4-hydroxyphenyl)-1-phenylethan, 1,1-1,4-Bis-[2-(4-hydroxyphenyl)-2-propyl]benzol, 1,3-Bis[2-(4-hydroxyphenyl)-2-propyl]-benzol (Bisphenol M), 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 2,2-Bis-(3,5-dichlor-4-hydroxyphenyl)-propan und 2,2-Bis-(3,5-dibrom-4-hydroxyphenyl)-propan.

Besonders bevorzugte Diphenole sind beispielsweise 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M), 2,2-Bis-(3,5-dimethyl-4-hydroxyphenyl)-propan, 1,1-Bis-(4-hydroxyphenyl)-1-phenylethan, 2,2-Bis-(3,5-dichlor-4-hydroxyphenyl)-propan, 2,2-Bis-(3,5-dibrom-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Ganz besonders bevorzugt sind 2,2-Bis-(4-hydroxyphenyl)-propan (Bisphenol A), 4,4'-Dihydroxybiphenyl (DOD), 1,3-Bis[2-(4-hydroxyphenyl)-2-propyl]-benzol (Bisphenol M) und 1,1-Bis-(4-hydroxyphenyl)-3,3,5-trimethylcyclohexan (Bisphenol TMC).

Die Diphenole können sowohl allein als auch im Gemisch miteinander verwendet werden; es sind sowohl Homopolycarbonate als auch Copolycarbonate einbezogen. Die Diphenole sind literaturbekannt oder nach literaturbekannten Verfahren herstellbar (siehe z.B. H. J. Buysch et al., Ullmann' Encyclopedia of Industrial Chemistry, VCH, New York 1991, 5. Ed., Vol. 19, p. 348).

Es werden bestimmte geringe Mengen, vorzugsweise Mengen zwischen 0,05 und 15 mol-%, besonders bevorzugt 0,1-10 mol-%, ganz besonders bevorzugt 0,2-5 mol-%, bezogen auf die Mole eingesetzter Diphenole, an trifunktionellen Verbindungen der Formeln (1) ((1a), (1b) und/oder (1c) bzw. (Va), (Vb) und/oder (Vc)) als sogenannte Verzweiger, eingesetzt. Die resultierende Langkettenverzweigung führt zu rheologischen Eigenschaften der erhaltenen Polycarbonate, die sich in einer verbesserten Fließfähigkeit im Vergleich zu linearen Typen äußert.

Die vorliegende Erfindung betrifft weiterhin ein Verfahren zur Herstellung verzweigter Polycarbonate und Copolycarbonate der Formeln (2a) und (2b), dadurch gekennzeichnet, dass Bisphenole und Verzweiger (1a) und/oder (1b) in wässriger alkalischer Lösung gelöst werden und mit einer gegebenenfalls in einem Lösemittel gelösten Carbonatquelle wie Phosgen in einem Zweiphasengemisch aus einer wässrigen alkalischen Lösung, einem organischen Lösemittel und einem Katalysator, bevorzugt einer Aminverbindung, zur Reaktion gebracht werden. Die Reaktionsführung kann auch mehrstufig erfolgen.

Die Konzentration der Bisphenole in der wässrigen alkalischen Lösung beträgt 2 bis 25 Gew.-%, bevorzugt 2 bis 20 Gew.-% besonders bevorzugt 2 bis 18 Gew.-% und ganz besonders 3 bis 15 Gew.-%. Die wässrige alkalische Lösung besteht aus Wasser, in dem Hydroxide von Alkali- oder Erdalkalimetallen gelöst sind. Bevorzugt sind Natrium- und Kaliumhydroxide.

Bei der Verwendung von Phosgen als Carbonatquelle beträgt das Volumenverhältnis wässrige alkalische Lösung zu organischem Lösemittel 5:95 bis 95:5 bevorzugt 20:80 bis 80:20, besonders bevorzugt 30:70 bis 70:30 und ganz besonders bevorzugt 40:60 bis 60:40. Das Molverhältnis Bisphenol zu Phosgen ist kleiner als 1:10, bevorzugt kleiner als 1:6 besonders bevorzugt kleiner als 1:4 und ganz besonders bevorzugt kleiner als 1:3. Die Konzentration der erfindungsgemäßen verzweigten Polycarbonate und Copolycarbonate in der organischen Phase beträgt 1,0 bis 25 Gew.-% bevorzugt 2 bis 20 Gew.-% , besonders bevorzugt 2 bis 18 Gew.-% und ganz besonders bevorzugt 3 bis 15 Gew.-%.

Die Konzentration der Aminverbindung beträgt bezogen auf die eingesetzte Bisphenolmenge 0,1 bis 10 mol-% bevorzugt 0,2 bis 8-mol % besonders bevorzugt 0,3 bis 6 mol-% und ganz besonders bevorzugt 0,4 bis 5 mol-%.

Bei der Carbonatquelle handelt es sich um Phosgen, Diphosgen oder Triphosgen, bevorzugt um Phosgen. Für den Fall, dass Phosgen eingesetzt wird, kann gegebenenfalls auf ein Lösemittel verzichtet und das Phosgen direkt in das Reaktionsgemisch eingeleitet werden.

Als Katalysator können tertiäre Amine wie Triethylamin oder N-Alkylpiperidine eingesetzt werden. Als Katalysatoren geeignet sind Trialkylamine und 4-(Dimethylamino)pyridin. Besonders geeignet sind Triethylamin, Tripropylamin, Triisopropylamin, Tributylamin, Triisobutylamin, N-Methylpiperidin, N-Ethylpiperidin und N-Propylpiperidin.

Als organisches Lösemittel kommen halogenierte Kohlenwasserstoffe wie Methylenchlorid und/oder Chlorbenzol, Dichlorbenzol, Trichlorbenzol oder Gemische davon oder aromatische Kohlenwasserstoffe, wie z.B. Toluol oder Xylole in Frage.

Die Reaktionstemperatur kann -5°C bis 100°C betragen, bevorzugt 0°C bis 80°C besonders bevorzugt 10°C bis 70°C und ganz besonders bevorzugt 10°C bis 60°C betragen.

Die Molekulargewichte Mw der erfindungsgemäßen verzweigten Polycarbonate und Copolycarbonate liegen im Bereich von 6 000 bis 200 000 g/Mol, bevorzugt zwischen 6 000 und 100 000 g/Mol besonders bevorzugt zwischen 10 000 und 80 000 g/Mol und ganz besonders bevorzugt zwischen 12 000 und 70 000 g/Mol (bestimmt mittels GPC und Polycarbonateichung).

Bevorzugt, besonders bevorzugt oder ganz besonders bevorzugt sind Ausführungsformen, welche von den unter bevorzugt, besonders bevorzugt oder ganz besonders bevorzugt bzw., vorzugsweise etc. genannten Parametern, Verbindungen, Definitionen und Erläuterungen Gebrauch machen.

Die in der Beschreibung aufgeführten allgemeinen oder in Vorzugsbereichen aufgeführten Definitionen, Parameter, Verbindungen und Erläuterungen können jedoch auch untereinander, also zwischen den jeweiligen Bereichen und Vorzugsbereichen beliebig kombiniert werden.

Die erfindungsgemäßen verzweigten Polycarbonate und Copolycarbonate können in bekannter Weise aufgearbeitet und zu beliebigen Formkörpern verarbeitet werden, beispielsweise durch Extrusion, Spritzguss oder Extrusionsblasformen.

Den erfindungsgemäßen verzweigten Polycarbonaten und Copolycarbonaten können noch andere aromatische Polycarbonate und/oder andere aromatische Polyestercarbonate und/oder andere aromatische Polyester in bekannter Weise zugemischt werden, beispielsweise durch Compoundierung.

Den erfindungsgemäßen verzweigten Polycarbonaten und Copolycarbonaten können noch die für diese Thermoplasten üblichen Additive wie Füllstoffe, UV-Stabilisatoren, Thermostabilisatoren, Antistatika und Pigmente in den üblichen Mengen zugesetzt werden; gegebenenfalls können das Entformungsverhalten, das Fließverhalten, und/oder die Flammwidrigkeit noch durch Zusatz externer Entformungsmittel, Fließmittel, und/oder Flammschutzmittel verbessert werden (z.B.

Alkyl- und Arylphosphite, -phosphate, -phosphane, -niedermolekulare Carbonsäureester, Halogenverbindungen, Salze, Kreide, Quarzmehl, Glas- und Kohlenstofffasern, Pigmente und deren Kombination. Solche Verbindungen werden z.B. in WO 99/55772, S. 15 - 25, und in den entsprechenden Kapiteln des "Plastics Additives Handbook" , ed. Hans Zweifel, 5^{th} Edition 2000, Hanser Publishers, Munich. beschrieben).

Die erfindungsgemäßen verzweigten Polycarbonate und Copolycarbonate, gegebenenfalls in Abmischung mit anderen Thermoplasten und/oder üblichen Additiven, können zu beliebigen Formkörpern/Extrudaten verarbeitet überall dort eingesetzt werden, wo bereits bekannte Polycarbonate, Polyestercarbonate und Polyester eingesetzt werden. Aufgrund ihres Eigenschaftsprofils eignen sie sich insbesondere als Materialien für den Spritzguss von größeren Formteilen, beispielsweise Autoscheiben und Plattenware. Sie eignen sich aber auch als Substratmaterialien für optische Datenspeicher wie z.B. CD, CD-R, DVD, oder DVD-R, sind aber auch beispielsweise als Folien im Elektrosektor als Formteile im Fahrzeugbau und als Platten für Abdeckungen im Sicherheitsbereich einsetzbar. Weitere mögliche Anwendungen der erfindungsgemäßen Polycarbonate sind:
1. Sicherheitsscheiben, die bekanntlich in vielen Bereichen von Gebäuden, Fahrzeugen und Flugzeugen erforderlich sind, sowie als Schilde von Helmen.
2. Herstellung von Folien, insbesondere Skifolien.
3. Herstellung von Blaskörpern (siehe beispielsweise US-Patent 2 964 794), beispielsweise 1 bis 5 Gallon Wasserflaschen.
4. Herstellung von lichtdurchlässigen Platten, insbesondere von Hohlkammerplatten, beispielsweise zum Abdecken von Gebäuden wie Bahnhöfen, Gewächshäusern und Beleuchtungsanlagen.
5. Herstellung optischer Datenspeicher.
6. Zur Herstellung von Ampelgehäusen oder Verkehrsschildern.
7. Zur Herstellung von Schaumstoffen (siehe beispielsweise DE-B 1 031 507).
8. Zur Herstellung von Fäden und Drähten (siehe beispielsweise DE-B 1 137 167 und DE-A 1 785 137).
9. Als transluzente Kunststoffe mit einem Gehalt an Glasfasern für lichttechnische Zwecke (siehe beispielsweise DE-A 1 554 020).
10. Als transluzente Kunststoffe mit einem Gehalt an Bariumsulfat, Titandioxid und oder Zirkoniumoxid bzw. organischen polymeren Acrylatkautschuken (EP-A 634 445, EP-A 269324) zur Herstellung von lichtdurchlässigen und lichtstreuenden Formteilen.
11. Zur Herstellung von Präzisionsspritzgussteilchen, wie beispielsweise Linsenhalterungen. Hierzu verwendet man Polycarbonate mit einem Gehalt an Glasfasern, die gegebenenfalls zusätzlich etwa 1-10 Gew.-% MoS₂, bezogen auf Gesamtgewicht, enthalten.
12. Zur Herstellung optischer Geräteteile, insbesondere Linsen für Foto- und Filmkameras (siehe beispielsweise DE-A 2 701 173).
13. Als Lichtübertragungsträger, insbesondere als Lichtleiterkabel (siehe beispielsweise EP-A 0 089 801).
14. Als Elektroisolierstoffe für elektrische Leiter und für Steckergehäuse sowie Steckverbinder.
15. Herstellung von Mobiltelefongehäusen mit verbesserter Beständigkeit gegenüber Parfüm, Rasierwasser und Hautschweiß.
16. Network interface devices
17. Als Trägermaterial für organische Fotoleiter.
18. Zur Herstellung von Leuchten, z.B. Scheinwerferlampen, als sogenannte "head-lamps", Streulichtscheiben oder innere Linsen, sowie Langfeldleuchten.
19. Für medizinische Anwendungen, z.B. Oxygenatoren, Dialysatoren.
20. Für Lebensmittelanwendungen, wie z.B. Flaschen, Geschirr und Schokoladenformen.
21. Für Anwendungen im Automobilbereich, wo Kontakt zu Kraftstoffen und Schmiermitteln auftreten kann, wie beispielsweise Stoßfänger gegebenenfalls in Form geeigneter Blends mit ABS oder geeigneten Kautschuken.
22. Für Sportartikel, wie z.B. Slalomstangen oder Skischuhschnallen.
23. Für Haushaltsartikel, wie z.B. Küchenspülen und Briefkastengehäuse.
24. Für Gehäuse, wie z.B. Elektroverteilerschränke.
25. Gehäuse für Elektrozahnbürsten und Föngehäuse.
26. Transparente Waschmaschinen - Bullaugen mit verbesserter Beständigkeit gegenüber' der Waschlösung.
27. Schutzbrillen, optische Korrekturbrillen.
28. Lampenabdeckungen für Kücheneinrichtungen mit verbesserter Beständigkeit gegenüber Küchendunstinsbesondere Öldämpfen.
29. Verpackungsfolien für Arzneimittel.
30. Chip-Boxen und Chip-Träger
31. Für sonstige Anwendungen, wie z. B. Stallmasttüren oder Tierkäfige.

Die Formkörper und Extrudate aus den erfindungsgemäßen Polymeren sind ebenfalls Gegenstand dieser Anmeldung.

Die nachfolgenden Beispiele sollen die Erfindung illustrieren ohne sie jedoch einzuschränken.

### Beispiele

### Beispiel 1

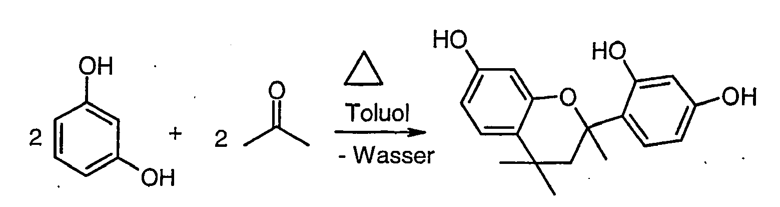

250 g (2,27 mol) Resorcin; 197,8 g (3,41 mol) Aceton und 1800 ml Toluol wurden unter Stickstoff vorgelegt und bei 50°C homogen gelöst. 416 g saurer Ionenaustauscher (Lewatit K1221, Fa. Bayer Leverkusen) wurden hinzugegeben und der Ansatz anschließend auf 82°C Sumpftemperatur (130°C Badtemperatur) erhitzt. Nach ca. 1 Stunde entstand eine leicht beige-trübe Suspension. Es wurden weitere 3 Stunden nachgerührt. Nach Abkühlung wurde das Produkt durch Filtration aus der Reaktionslösung isoliert und im Wasserstrahlvakuum über Nacht getrocknet.
Ausbeute: 140 g (41 % der Theorie) eines weißen Pulvers.
Analytik:
- ¹H-NMR (400 MHz, TMS, DMSO) δ = 9,28 (s, 1H), 9,04 (s, 1H), 8,94 (s, 1H), 6,90-6,94 (d, 1H), 6,80-6,84 (d, 1H), 6,25-6,26 (d, 3H), 6,01-6,04 (d, 1H), 2,89-2,93 (d, 1H),1,73-1,77 (d, 1H), 1,57 (s, 3H), 1,14 (s, 3H), 0,66 (s, 3H).
- Ein 2D-HMBC-Experiment bestätigt die unter Beispiel 1 angegebene Struktur. Es wird nur ein Isomer mit einem aromatischen Ring an einem quartären C-Atom, benachbart zu einem Saüerstoffatom detektiert.
- GC-MS nach Derivatisierung als Trimetylsilylderivat: Es wird hierbei die erwartete Masse TMS-MG=516 als einziger Produktpeak gefunden.

### Beispiel 2-8

Analog Beispiel 1 werden Synthesen des Verzweigers unter veränderten Bedingungen bzgl. des Stöchiometrieverhältnisses Resorcin/Aceton durchgeführt. Die Ausbeuten sind in folgender Tabelle angegeben:

| Nr. | Einwaage g Resorcin | Einwaage Mol Resorcin | Einwaage g Aceton | Einwaage mol Aceton | Verhältnis Mol Resorcin/ Aceton | Ionenaus- tauscher ml | Toluol g | Ausbeute g | Ausbeute % |
|---|---|---|---|---|---|---|---|---|---|
| 2 | 500 | 4,54 | 395,6 | 6,81 | 1 zu 1,5 | 833,3 | 4000 | 200,99 | (681,82g) 29,5% |
| 3 | 250 | 2,27 | 197,8 | 3,41 | 1 zu 1,5 | 416 | 1800 | 63,16 | (340g) 18,6% |
| 4 | 250 | 2,27 | 197,8 | 3,41 | 1 zu 1,5 | 416 | 1800 | 140 | (340g) 41% |
| 5 | 1750 | 15,89 | 593,4 | 10,22 | 1 zu 0,6 | 1248 | 5400 | 240 | (2386,4g) 10,1% |
| 6 | 1000 | 9,08 | 791,2 | 13,62 | 1 zu 1,5 | 1664 | 8000 | 390 | (1363g) 28,6% |
| 7 | 1000 | 9,08 | 791,2 | 13,62 | 1 zu 1,5 | 1664 | 8000 | 370 | (1363g) 27,1% |
| 8 | 1000 | 9,08 | 791,2 | 13,62 | 1 zu 1,5 | 1664 | 8000 | 420 | (1363g) 30,8% |

### Beispiel 9

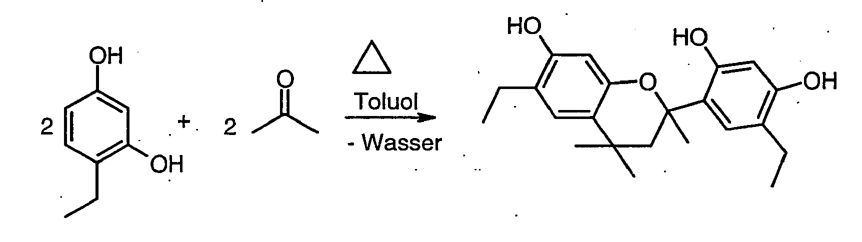

37,31 g (0,27 mol) 4-Ethylresorcin (Fa. Aldrich); 23,52 g (0,405 mol) Aceton und 300 ml Toluol wurden unter Stickstoff vorgelegt und bei 50°C homogen gelöst. 50 g saurer Ionenaustauscher (Lewatit K1221, Fa. Bayer Leverkusen) wurden hinzugegeben und der Ansatz anschließend auf Rückfluss erhitzt. Nach ca. 1 Tag entstand eine gelbe, klare Lösung, nach 2 Tagen eine orangetrübe Lösung mit etwas Niederschlag. Dieser wurde nach dem Abkühlen durch Filtration abgetrennt. Das Filtrat wurde eingeengt, wodurch 29,0 g eines braunen Rohproduktes erhalten wurde, welches in einer Mischung aus Methylenchlorid/Petrolether (1:1) umkristallisiert werden konnte. Dadurch konnte 13 g eines hell-beige bis gelben Feststoff erhalten werden, welcher noch mal in einer Mischung aus Methylenchlorid/Petrolether (1:1) umkristallisiert wurde. Nach dem Trocknen im Wasserstrahlvakuum über Nacht bei 60°C wurde das gewünschte Produkt erhalten.
Ausbeute: 7,0 g (14,5 % der Theorie) eines weißen Pulvers.
Analytik:
- ¹H-NMR (400 MHz, TMS, DMSO) δ = 9,02 (s, 1H), 8,92 (s, 1H), 8,75 (s, 1H), 6,90-6,94 (d, 1H), 6,80 (s, 2H), 6,33-6,27 (d, 2H), 2,86-2,82 (d, 1H), 2,15-2,45 (m, 4 H), 1,79-1,75 (d, 1H), 1,54 (s, 3H), 1,15 (s, 3H), 1,04 (t, 3H), 0,89 (t, 3H) 0,67 (s, 3H).
- Ein durch ¹H-NMR (400 MHz, TMS, DMSO) identifiziertes Nebenprodukt (zu Beginn abgetrennter Niederschlag) hat folgende Struktur:
¹H-NMR (400 MHz, TMS, DMSO) δ = 8,84 (s, 2H), 6,98 (s, 2H), 5,97 (s, 2H), 2,42-2,50 (m, 4H), 2,0-1,85 (m, 4 H), 1,46 (s, 6H), 1,25 (s, 6H), 1,07-1,1 (t, 6H).

### Beispiel 10

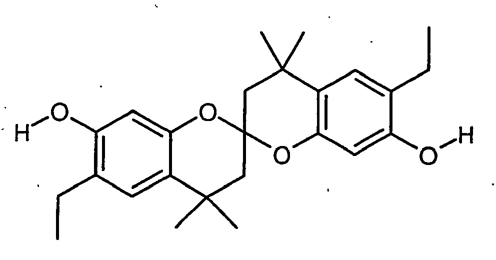

Zu einer mit Stickstoff inertisierten Lösung von 4096,3 g (17,94 mol) Bisphenol A und 1584 g (39,6 mol) Natriumhydroxid in 28,4 1 Wasser werden 28,4 1 Methylenchlorid und 91 Chlorbenzol hinzugegeben. Bei einer einstufigen Fahrweise gibt man 17,30 g (0,0576 mol bzw. 0,32 mol-% bzgl. Bisphenol A) des Verzweigers aus Beispiel 1 und 91,92 g (0,612 mol bzw. 3,4 mol-% bzgl. Bisphenol A) p-tert.-Butylphenol (BUP) als Kettenabbrecher hinzu. Bei einem pH-Wert von 13,4 und 21°C gibt man im Verlauf von 1 Stunde und 20 Minuten 3560 g (36 mol) Phosgen hinzu. Um den pH-Wert nicht unter 12,6 fallen zu lassen, wurde während der Phosgenierung 25 %-ige Natronlauge zugegeben. Nach beendeter Phosgenierung und Spülung mit Stickstoff gibt man 24,7 ml (0,18 mol, 1 mol-% bzgl. Bisphenol A) n-Ethylpiperidin als Katalysator zu und lässt 1 Stunde nachrühren. Die organische Phase wird nach Abtrennen der wässrigen Phase mit Phosphorsäure angesäuert und mit destilliertem Wasser neutral und salzfrei gewaschen. Nach Lösungsmittelaustausch gegen Chlorbenzol wird das Produkt über einen Ausdampfextruder extrudiert.
Man erhält 3951,5 g Polycarbonat.
Analytik:
- ¹H-NMR Gehalt an Verzweiger: 0,28 mol-%
   Gehalt an Kettenabbrecher: 3,28 mol-%
- relative Lösungsviskosität in Methylenchlorid (0,5 g/100 ml Lösung): 1,30
- GPC (Kalibrierung gegen BPA-Polycarbonat): Molekulargewicht Mw=31786, Uneinheitlichkeit D=2,55)

### Beispiel 11

Ermittlung der Viskosität als Funktion der Schergeschwindigkeit (ISO 11443).

Das in Beispiel 10 erhaltene verzweigte Polycarbonat wird bei 300 °C rheologisch untersucht. Dabei werden folgende Daten erhalten:

| Schergefälle [s⁻¹] | Viskosität [Pas] |
|---|---|
| 50 | 851 |
| 100 | 727 |
| 200 | 612 |
| 500 | 459 |
| 1000 | 343 |
| 1500 | 276 |
| 5000 | 134 |

### Beispiel 12 (Vergleichsbeispiel)

Zum Vergleich wird analog Beispiel 11 ein lineares BPA-Polycarbonat (Makrolon 3108, Bayer AG) mit einem Molekulargewicht Mw=31000 herangezogen.

| Schergefälle [s ⁻¹] | Viskosität [Pas] |
|---|---|
| 50 | 789 |
| 100 | 764 |
| 200 | 704 |
| 500 | 571 |
| 1000 | 448 |
| 1500 | 351 |
| 5000 | 172 |

Wie aus dem Vergleich der Viskositätsdaten zwischen Beispiel 11 und 12 zu ersehen, ist die Schmelzviskosität bei 300°C bei gleichem Molekulargewicht fast über den ganzen Bereich des Schergefälles geringer (außer bei sehr niedrigen Scherraten). Bei höheren Scherraten (Spritzgussanwendungen) fließt das verzweigte Polycarbonat aus Beispiel 2 leichter als das Vergleichsmaterial.

### Beispiel 13 -31

Analog Beispiel 2 werden folgende verzweigte Polycarbonate hergestellt, die sich durch einen höheren Gehalt an eingebautem Verzweiger aus Beispiel 1 auszeichnen.

| **Beispiel** | **Mol%BUP** | **Mol % Verzweiger aus Beispiel 1** | **Verhältnis %BUP %Verzweiger** | **Rel. Lösungs-Viskosität** | **Tg (°C)** | **Mw** | **Mn** |
|---|---|---|---|---|---|---|---|
| | | | | | | | |
| 13 | 3 | 0,5 | 6 | 1,304 | 147,7 | 36400 | 12230 |
| 14 | 5 | 0,7 | 7,1 | 1,267 | 144 | 29800 | 9870 |
| 15 | 7 | 1 | 7 | 1,215 | 140 | 23450 | 7223 |
| 16 | 10 | 1,5 | 6,7 | 1,172 | 132 | 20150 | 5380 |
| 17 | 12 | 3 | 4 | 1,162 | 129 | 22600 | 4740 |
| 18 | 3 | 0,7 | 4,3 | 1,44 | 151 | 66460 | 14000 |
| 19 | 5 | 1,25 | 4 | 1,361 | 148 | 57000 | 11800 |
| 20 | 8 | 1,5 | 5,3 | 1,219 | 141 | 27700 | 7400 |
| 21 | 10 | 3 | 3,3 | 1,288 | 139 | 59200 | 7800 |
| 22 | 5 | 0,7 | 7,1 | 1,283 | 148,6 | 31600 | 11500 |
| 23 | 3 | 0,8 | 3,76 | 1,548. | 154 | | |
| 24 | 3 | 1 | 3 | 1,638 | 154 | | |
| 25 | 3 | 1,2 | 2,5 | 1,794 | 151 | | |
| 26 | 8 | 1,5 | 5,33 | 1,21 | 144,8 | 24400 | 6830 |
| 27 | 5 | 0,6 | 8,33 | 1,257 | 147,4 | 27300 | 9100 |
| 28 | 6 | 0,8 | 7,5 | 1,255 | 147,9 | 28800 | 9200 |
| 29 | 4 | 0,5 | 8 | 1,322 | 151,1 | 36860 | 11500 |
| 30 | 4 | 0,3 | 13,33 | 1,307 | 150,3 | 33100 | 11300 |
| 31 | 3 | 0,3 | 10 | 1,385 | 152,3 | 43700 | 15500 |

| | | | | | | | |
|---|---|---|---|---|---|---|---|
| BUP= p-t-Butylphenol | | | | | | | |

Überraschenderweise traten in keinem der erfindungsgemäßen Beispiele Probleme bei der Synthese auf, die sich in Form einer Qualle äußerten.

### Beispiel 32

Ermittlung der Viskosität als Funktion der Schergeschwindigkeit (ISO 11443).

Das in Beispiel 26 erhaltene verzweigte Polycarbonat wird bei 300°C rheologisch untersucht. Dabei werden folgende Daten erhalten:

| Schergefälle [s⁻¹] | Viskosität [Pas] |
|---|---|
| 50 | 138 |
| 100 | 138 |
| 200 | 129 |
| 500 | 110 |
| 1000 | 91 |
| 1500 | 80 |
| 5000 | 49 |

### Beispiel 33

Ermittlung der Viskosität als Funktion der Schergeschwindigkeit (ISO 11443).

Das in Beispiel 27 erhaltene verzweigte Polycarbonat wird bei 300°C rheologisch untersucht. Dabei werden folgende Daten erhalten:

| Schergefälle [s⁻¹] | Viskosität [Pas] |
|---|---|
| 50 | 207 |
| 100 | 203 |
| 200 | 191 |
| 500 | 163 |
| 1000 | 137 |
| 1500 | 121 |
| 5000 | 73 |

### Beispiel 34

Ermittlung der Viskosität als Funktion der Schergeschwindigkeit (ISO 11443).

Das in Beispiel 28 erhaltene verzweigte Polycarbonat wird bei 300°C rheologisch untersucht. Dabei werden folgende Daten erhalten:

| Schergefälle [s⁻¹] | Viskosität [Pas] |
|---|---|
| 50 | 420 |
| 100 | 385 |
| 200 | 328 |
| 500 | 249 |
| 1000 | 193 |
| 1500 | 165 |
| 5000 | 89 |

### Beispiel 35

Auf analege Weise wie im Beispiel 10 wurde ein Polycarbonat aus 70 mol-% BPA, 30 mol-% 4,4'-Dihydroxybiphenyl (DOD), 0,3 mol-% des Verzweigers aus Beispiel 1, sowie 4,9 mol-% p-tert-Butylphenol als Kettenabbrecher hergestellt.
Analytik:
Mw: 28700 g/mol; Mn: 11200 g/mol
Vicat VSTB 120: 140 °C

## Patentansprüche

1. Verwendung von Verbindungen der Formeln 1a und/oder 1b 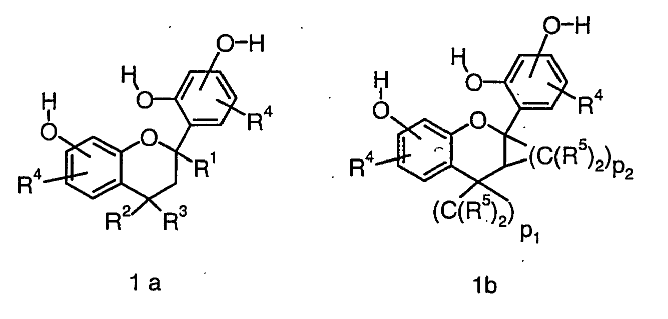 in welcher
R¹, R² und R³ für lineare oder verzweigte C₁-C₁₀ Alkyl, R⁴ und R⁵ für Wasserstoff oder lineare oder verzweigte C₁-C₁₀ Alkyl, p₁ und p₂ unabhängig voneinander für eine ganze Zahl zwischen 3 und 10 stehen, wobei R² und R³ auch einen gemeinsamen gegebenenfalls substituierten C₅-C₁₀ Cycloalkyl-Rest ergeben können (Formel 1-b), bzw. Mischungen solcher Verbindungen als Verzweiger bei der Herstellung von Polycarbonaten und Copolycarbonaten.

2. Verfahren zur Herstellung von Polycarbonat nach dem Phasengrenzflächenverfahren, **dadurch gekennzeichnet, dass** Verbindungen der Formeln 1a und/oder 1b 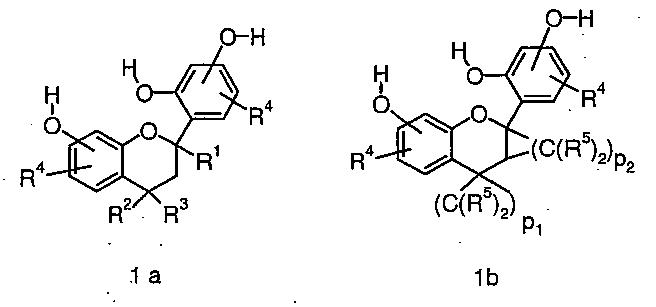 als Verzweiger eingesetzt werden.

3. Polycarbonat, enthaltend von den Verbindungen der Formeln 1a und/oder 1b abgeleitete Verzweigerstrukturen.

4. Produkte, aus Spritzguss- oder Extrusionsverfahren wie z. B. Autoscheiben, optische Datenspeicher, Platten, Folien und Flaschen, enthaltend Polycarbonate gemäß Anspruch 3.

## Claims

1. Use of compounds of the formulae 1a and/or 1b 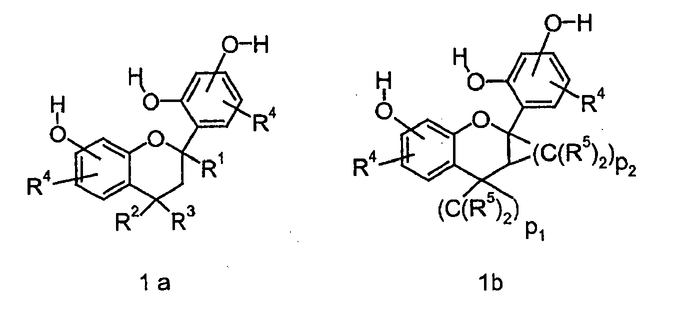 in which
R¹, R² and R³ denote linear or branched C₁-C₁₀-alkyl, R⁴ and R⁵ denote hydrogen or linear or branched C₁-C₁₀-alkyl, p₁ and p₂ independently of one another denote a whole number between 3 and 10, wherein R² and R³ may also form a common, optionally substituted C₅-C₁₀ cycloalkyl radical (formula 1b), or mixtures of such compounds as branching agents in the production of polycarbonates and copolycarbonates.

2. Process for the production of polycarbonate by the phase interface process, **characterised in that** compounds of the formulae 1a and/or 1b 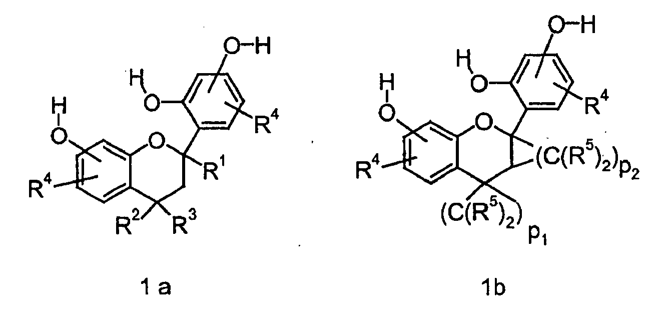 are used as branching agents.

3. Polycarbonate containing branching agent structures derived from the compounds of the formulae 1a and/or 1b.

4. Products produced by injection moulding or extrusion processes, such as for example automobile panels, optical data storage media, sheets, films and bottles, containing polycarbonates according to claim 3.

## Revendications

1. Utilisation des composés de formules 1a et/ou 1b 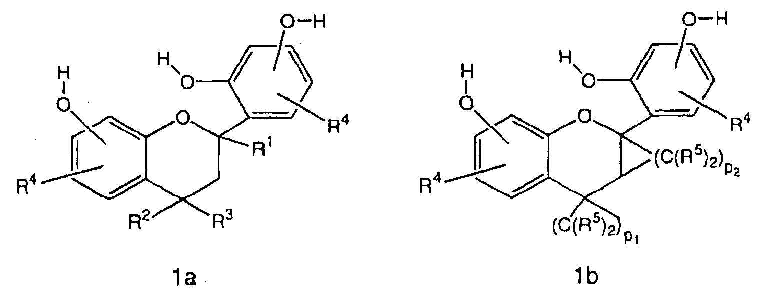 dans lesquelles
R¹, R² et R³ signifient un groupe alkyle en C₁-C₁₀ linéaire ou ramifié, R⁴ et R⁵ signifient un hydrogène ou un groupe alkyle en C₁-C₁₀ linéaire ou ramifié, p₁ et p₂ indépendamment l'un de l'autre signifient un nombre entier entre 3 et 10, où R² et R³ peuvent également ensemble représenter un reste cycloalkyle en C₅-C₁₀ éventuellement substitué (formule 1b) ou des mélanges de tels composés comme agents de ramification pour la préparation de polycarbonates et de copolycarbonates.

2. Procédé de préparation selon le procédé en flacon avec limite de phases, **caractérisé en ce que** les composés de formules 1a et/ou 1 b sont utilisés comme agents de ramification.

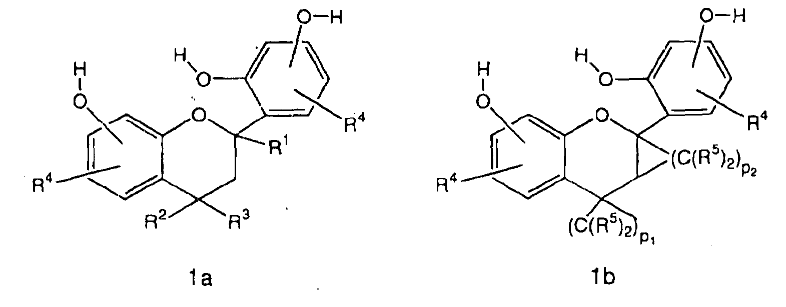

3. Polycarbonate, contenant des structures ramifiées dérivant des composés de formules 1a et/ou 1b.

4. Produits, provenant d'un procédé de coulage par injection ou d'extrusion comme par exemple des pare-brises, des enregistreurs de données optiques, des plaques, des feuilles et des flacons, contenant un polycarbonate selon la revendication 3.
